# EUROPÄISCHE PATENTSCHRIFT

(11) **EP 0 883 263 B1**
(45) Veröffentlichungstag und Bekanntmachung des Hinweises auf die Patenterteilung: **06.09.2006**
(21) Anmeldenummer: 98109280.2
(22) Anmeldetag: 22.05.1998
(51) Int. Cl.: H04L 12/28, H04N 7/10

(54) **Vorrichtung zur Übertragung von digitalen Signalen**
Apparatus for digital signal transmission
Dispositif pour la transmission de signaux numériques

(30) Priorität: 05.06.1997 DE 19723529
(43) Veröffentlichungstag der Anmeldung: 09.12.1998
(73) Patentinhaber: Grundig Multimedia B.V., 1083HJ Amsterdam (NL)
(72) Erfinder: Herfet, Thorsten, Dr.-Ing., 90762 Fürth (DE); Kays, Rüdiger, Dr.-Ing., 90762 Fürth (DE)
(74) Vertreter: Pröll, Jürgen

(56) Entgegenhaltungen:
- EP-A- 0 687 084
- US-A- 5 598 523
- O'BRIEN JR T E: "PHYSICAL AND MEDIA SPECIFICATIONS OF THE CXBUS" IEEE TRANSACTIONS ON CONSUMER ELECTRONICS, Bd. 37, Nr. 3, 1. August 1991, Seiten 357-366, XP000263208

## Beschreibung

Die Erfindung betrifft eine Vorrichtung zur Übertragung von digitalen Signalen über ein Übertragungsnetz, an welches ein Vielzahl von Endgeräten mit unterschiedlichen Bandbreiteanforderungen angeschlossen ist.

Bei der leitungs- oder HF-basierten Vernetzung verschiedener breitbandiger Geräte ist es bekannt (ETSI95), virtuelle Kanäle über Zugriffsmechanismen wie zum Beispiel Carrier Sense Multiple Access *(CSMA) zu verwalten.* Hierbei wird den Geräten ein breitbandiger Übertragungskanal zur Verfügung gestellt, auf den durch Abwarten einer Übertragungslücke, gegebenenfalls mit zusätzlichen Merkmalen zur Gewährleistung eines ordnungsgemäßen Datenverkehrs, zugegriffen wird.

Weiterhin ist die Verwaltung des Zugriffes über globale Synchronisationsmaßnahmen bekannt (ITUT90,CTIA92). In diesem Fall werden, ausgehend von einer zentralen Systemarchitektur, Pilot- und Synchronisationskanäle zur Verfügung gestellt, die von allen Endgeräten in definierten Mindestintervallen abgehört werden. Die Endgeräte besitzen daher einen Bereitschafts-Modus, der nach dem erneuten Einschalten des jeweiligen Gerätes erst wieder erreicht werden muß.

Vorraussetzung für die Realisierung der oben genannten Systeme ist die Gleichartigkeit der eingesetzten Endgeräte. Dies bedeutet, daß im Falle des breitbandigen CSMA-Zugriffs alle Endgeräte systemkonform, unter Umständen mit sehr hoher Geschwindigkeit, senden und empfangen können müssen, wie dies z. B. in einem Rechnerverbund der Fall ist. Ein breitbandiger CSMA-Zugriff impliziert zusätzlich einen Vielfachzugriff, der auf Zeitmultiplex aufbaut. In diesem Fall müssen zur Korrektur der Kanaleinflüsse zusätzliche Maßnahmen wie eine adaptive Entzerrung getroffen werden.

Im Falle des synchronen Zugriff müssen alle Endgeräte eine Einrichtung zum Abhören des Kanals und zur darauf aufbauenden Synchronisation besitzen. Weiterhin können die Geräte nur aus einem Bereitschafts-Modus heraus angesteuert werden. Ein spontanes Senden von Steuerinformationen ist nicht möglich.

Für digitale Audio-Video-Netze (AV-Netze) gilt die Vorraussetzung der Endgerätehomogenität nicht. Vielmehr sind hier von sehr komplexen, bidirektionalen Endgeräten, wie beispielsweise digitalen Videorecordern, Satellitenempfängern, Fernsehempfängern, usw., bis hin zu sehr einfachen, unidirektionalen Endgeräten, beispielsweise Fernbedienungen, alle Kategorien vertreten. Auch die Bandbreiteanforderungen reichen von wenigen bps für Gebäudesteuerungen und Fernbedienungen über einige 10-100 kbps für Audioanwendungen bis hin zu einigen 10 Mbps für Fernseh- und Videoanwendungen. Eine solche Gerätevielfalt kann mit einer einfachen Netzarchitektur nicht realisiert werden.

Ausgehend von diesem Stand der Technik liegt der Erfindung die Aufgabe zugrunde, eine Vorrichtung zur Übertragung von digitalen Signalen über ein Übertragungsnetz, an welches eine Vielzahl von Endgeräten angeschlossen ist, derart auszugestalten, daß es flexibel nutzbar ist.

Diese Aufgabe wird bei einer Vorrichtung mit den in Oberbegriff des Anspruchs 1 angegebenen Merkmalen durch die im kennzeichnenden Teil des Anspruchs 1 angegebenen Merkmale gelöst. Vorteilhafte Ausgestaltungen und Weiterbildungen ergeben sich aus den abhängigen Ansprüchen.

Die Vorteile der Erfindung bestehen insbesondere darin, daß mittels der beanspruchten Vorrichtung den unterschiedlichen Bandbreitenanforderungen der an das Übertragungsnetz angeschlossenen Endgeräte in der Weise Rechnung getragen wird, daß Übertragungskanäle unterschiedlicher Bandbreite zur Verfügung gestellt werden, die von den Endgeräten flexibel und effektiv nutzbar sind. Insbesondere können die an das Übertragungsnetz angeschlossenen Endgeräte bezüglich Ihrer Elektronik unterschiedlich aufgebaut sein. Beispielsweise benötigen einfache unidirektionale

Aus O'Brian Jr. T. E: "Physical and media specification of the CX-Bus" IEEE transactions on consumer electronics, Band 37, Nr. 3, 1. Aug. 1991, Seiten 357 bis 366, XP 000263204 ist die Beschreibung eines CX-Busses bekannt. Der CX-Bus weist die Eigenschaft auf, dass ein breitbandiges Übertragungsmedium in Form eines Kabels vorhanden ist und die Bandbreite des Übertragungsmediums in einzelne Unterkanäle aufteilbar ist.

Steuergeräte, die ausschließlich niederratige Steuerinformationen aussenden und deshalb lediglich einen schmalbandigen Übertragungskanal benötigen, keinerlei für breitbandiges und gegebenenfalls mit hoher Geschwindigkeit erfolgendes Senden und Empfangen eingerichtete Sende- und Empfangselektronik. Weiterhin kann bei einer Vorrichtung gemäß der Erfindung Steuerinformation niedriger Bandbreite, die beispielsweise von einem breitbandige Videosignale verarbeitenden Videogerät ausgesendet wird, ebenfalls über den schmalbandigen Übertragungskanal übertragen werden, so daß kein breitbandiger Kanal für diese Zwecke verschwendet wird.

Die Effektivität der Signalübertragung wird durch eine Anpassung des breitbandigen Audio-/Video-Übertragungskanals an die jeweils vorliegenden Bandbreitenbedürfnisse der zu übertragenden Signale weiter erhöht.

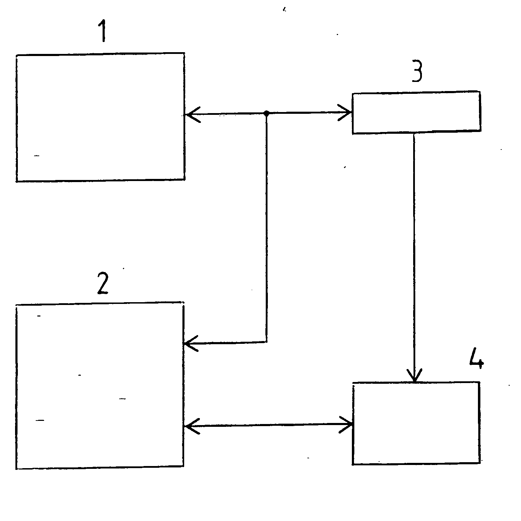

Weitere vorteilhafte Eigenschaften der Erfindung ergeben sich aus deren beispielhafter Erläuterung anhand der Figur. Diese zeigt ein Blockschaltbild eines hierarchischen, digitalen Audio-Video-Übertragungssystems, wie es beispielsweise in einem großen Gebäudekomplex als ein firmeninternes Informations - und Steuersystem oder in einem Einfamilienhaus als Hausübertragungsnetz verwendet werden kann.

Bei diesem Audio-Video-Übertragungssystem sind mit der Bezugsziffer 1 eine Vielzahl von einfachen uni- oder bidirektionalen Netzteilnehmern wie beispielsweise Fernbedienungen und Hausinstallationskomponenten bezeichnet. Diese einfachen uni- oder bidirektionalen Netzteilnehmer sind jeweils an den schmalbandigen Übertragungskanal 3 angeschlossen und können über diesen Steuerinformationen zu einem anderen der einfachen uni- oder bidirektionalen Netzteilnehmer übertragen oder Steuerinformationen von diesem anderen Netzteilnehmer empfangen. Diese Steuerinformationen werden vorzugsweise mit einer niedrigen Datenrate übertragen, so daß die Sende- und Empfangselektronik in diesen Geräten vergleichsweise preisgünstig realisiert sein kann. Der Zugriff auf diesen schmalbandigen Übertragungskanal 3 kann spontan erfolgen und beispielsweise auf dem grundsätzlich bekannten Carrier Sense Multiple Access (CSMA) - Prinzip basieren. Dieses Zugriffsprinzip zeichnet sich dadurch aus, daß der Kanal auf das Auftreten einer Übertragungslücke überwacht und diese Übertragungslücke vom Endgerät zur Übertragung von Steuerinformationen verwendet wird. Gegebenenfalls kann der Zugriff auf den schmalbandigen Übertragungskanal 3 auch vom Vorliegen weiterer Kriterien abhängig sein. Beispielsweise können den verschiedenen Endgeräten unterschiedliche Prioritäten zugeordnet sein.

Weiterhin können die mit der Bezugsziffer 1 bezeichneten einfachen uni- oder bidirektionalen Netzteilnehmer auch Steuerinformationen zu jedem einer Vielzahl von komplexeren Netzteilnehmern aussenden oder von diesen empfangen. Die komplexeren Netzteilnehmer sind insgesamt mit der Bezugsziffer 2 bezeichnet, sind ebenfalls an den schmalbandigen Übertragungskanal 3 angeschlossen und weisen ebenfalls eine Sende- und Empfangselektronik auf, die zur Signalübertragung über den schmalbandigen Übertragungskanal notwendig ist. Bei diesen komplexeren Netzteilnehmern handelt es sich um Endgeräte, die sowohl Steuerinformationen niedriger Bandbreite als auch Audio- und/oder Videosignale mit hoher Bandbreite aussenden und /oder empfangen können, beispielsweise um digitale Videorecorder, Fernsehempfänger, Radiogeräte, Bildtelefone, Satellitenempfänger, usw. Die von diesen Geräten empfangenen oder ausgesandten Steuerinformationen sind beispielsweise Programmwahlinformationen, Lautstärkeinformationen, Laufwerksinformationen, Einschaltbefehle, Ausschaltbefehle und Helligkeitsinformationen oder auch Empfangsbestätigungsinformationen, die dem jeweils sendenden Gerät den ordnungsgemäßen Empfang der ausgesendeten Informationen bestätigen.

Ferner wird der schmalbandige Übertragungskanal 3 auch zur Übertragung von Steuerinformationen zwischen den einzelnen mit der Bezugsziffer 2 bezeichneten komplexeren Netzteilnehmern verwendet.

Die insgesamt mit der Bezugsziffer 2 versehenen komplexeren Netzteilnehmer sind weiterhin an einen breitbandigen Audio-/Video-Übertragungskanal 4 angeschlossen, welcher zur uni- oder bidirektionalen Übertragung von Audio- und/oder Videosignalen vorgesehen ist. Dieser breitbandige Audio-/Video-Übertragungskanal 4 ist vorzugsweise in eine Vielzahl von dynamischen Unterkanälen aufteilbar, wobei die Bandbreite und Datenrate jedes dieser Unterkanäle an den jeweiligen Bedarf anpaßbar ist. Die genannte Aufteilung in Unterkanäle kann auf einem der grundsätzlich bekannten Übertragungsverfahren beruhen, bei denen der zur Verfügung stehende Übertragungskanal zu einer Multiplexübertragung einer Vielzahl verschiedener Signale verwendet wird, beispielsweise dem Zeitmultiplexverfahren, dem OFDM-Verfahren oder dem CDM-Verfahren. Mittels der genannten Aufteilung wird in vorteilhafter Weise dem Umstand Rechnung getragen, daß die zur Übertragung von Audio- und /oder Videosignalen verschiedener Standards erforderliche Bandbreite unterschiedlich ist. Beispielsweise ist die zur Übertragung eines Audiosignals benötigte Bandbreite kleiner als die zur Übertragung eines Standbilds erforderliche Bandbreite und diese wiederum kleiner als die zur Übertragung eines Bewegtbilds notwendige Bandbreite.

Die Verwaltung und Freischaltung der genannten dynamischen Unterkanäle des breitbandigen Audio-/Video-Übertragungskanals 4 erfolgt unter Verwendung des schmalbandigen Übertragungskanals 3.

Zu diesem Zweck wird beispielsweise von einem Videorecorder einer an den schmalbandigen Übertragungskanal 3 angeschlossenen, nicht gezeichneten zentralen Steuereinheit, bei der es sich um einen Bestandteil eines der Endgeräte oder um einen Bestandteil eines separaten Steuergerätes handeln kann, über den schmalbandigen Übertragungskanal 3 ein Anfragesignal zugeführt, mit welchem der zentralen Steuereinheit mitgeteilt wird, daß mittels des Videorecorders eine in einem bestimmten Satellitenkanal übertragene Fernsehsendung aufgezeichnet werden soll. Die Steuereinheit überprüft als Reaktion auf dieses Anfragesignal, ob ein Unterkanal geeigneter Bandbreite des breitbandigen Audio-/Video-Übertragungskanals 4 zur Übertragung von Satellitenfernsehsignalen frei ist, sorgt gegebenenfalls unter Berücksichtigung vorgegebener hierarchischer Kriterien für die Einrichtung eines derartigen Unterkanals und ordnet diesen Unterkanal im Sinne einer Freischaltung dem Videorecorder und dem Satellitenempfänger zu. Die diesbezügliche Steuerinformation wird dem Satellitenempfänger und dem Videorecorder von der zentralen Steuereinheit jeweils über den schmalbandigen Übertragungskanal 3 zugeführt, so daß die Elektronik des Videorecorders und des Satellitenempfängers zur gewünschten Signalübertragung über den breitbandigen Audio-/Video-Übetragungskanal 4 eingestellt werden kann.

Diese Einstellung muß beispielsweise bezüglich der jeweils notwendigen Bandbreite, der jeweiligen Frequenzlage, des jeweiligen Zeitrahmens, usw., erfolgen.

Mittels der beschriebenen Vorrichtung wird nach alledem ein neuartiges, hierarchisches und digitales Audio-Video-Übertragungssystem geschaffen, welches einen schmalbandigen Übertragungskanal 3 zur uni- oder bidirektionalen Übertragung von Steuersignalen aufweist und unter dessen Verwendung die Verwaltung und Freischaltung eines weiterhin vorhandenen breitbandigen Übertragungskanals 4 erfolgt, über welchen die Übertragung breitbandiger Audio- und/oder Videosignale vorgenommen wird. Der breitbandige Übertragungskanal 4 ist vorzugsweise in eine Vielzahl von dynamischen Unterkanälen aufteilbar, so daß den bei Endgeräten unterschiedlicher Bandbreite- und Geschwindigkeitsanforderungen auftretenden Erfordernissen in flexibler Weise Rechnung getragen werden kann. Das beschriebene System kann zur Übertragung völlig verschiedenartiger und voneinander unabhängiger Signale über ein und dasselbe Übertragungsnetz verwendet werden, wobei dem jeweils zu übertragenden Signal ein an dieses Signal angepaßter Übertragungskanal zur Verfügung gestellt wird.

## Patentansprüche

1. Vorrichtung zur Übertragung von digitalen Signalen über ein Übertragungsnetz, an welches eine Vielzahl von Endgeräten (1, 2) angeschlossen ist, wobei die Endgeräte unterschiedliche Bandbreitenanforderungen aufweisen und das Übertragungsnetz einen schmalbandigen Übertragungskanal (3) zur Übertragung von Daten von wenigen bps zur Übertragung von Steuerinformationen und einen breitbandigen Audio-/Video-Übertragungskanal (4) mit einer Bandbreite von wenigen 10 kbps bis hin zu einigen 10 Mbps zur Übertragung von Audio- und/oder Videosignalen aufweist, wobei der schmalbandige Übertragungskanal von allen an das Übertragungsnetz angeschlossenen Endgeräten (1, 2) und der breitbandige Audio-/Video-Übertragungskanal nur von den Endgeräten mit hoher Bandbreitenanforderung (2) nutzbar ist,
**dadurch gekennzeichnet, dass**
eine Steuereinheit in der Vorrichtung vorgesehen ist, welche als Reaktion auf ein Anfragesignal eines Endgerätes überprüft, ob ein Unterkanal geeigneter Bandbreite, der vom betreffenden Endgerät als breitbandiger Audio-/Video-Übertragungskanal benötigt wird, frei ist und diesen an das Endgerät als Signalquelle und an ein weiteres Endgerät als dessen Signalsenke frei gibt und, falls ein derartiger Unterkanal nicht vorhanden ist, unter Berücksichtigung vorgegebener hierarchischer Kriterien für die Einrichtung dieses Unterkanals sorgt, diesen dann eingerichteten Unterkanal im Sinne einer Freischaltung zwischen den zwei Endgeräten frei gibt und der schmalbandige Übertragungskanal zur unidirektionalen Übertragung von Steuerinformationen vorgesehen ist und der breitbandige Audio-/Video-Übertragungskanal in eine Vielzahl von dynamischen Unterkanälen aufteilbar ist und der schmalbandige Übertragungskanal zur Verwaltung und Freischaltung der dynamischen Unterkanäle vorgesehen ist.

2. Vorrichtung nach Anspruch 1,
**dadurch gekennzeichnet, dass**
der schmalbandige Übertragungskanal zur niederratigen Übertragung von Steuerinformationen vorgesehen ist.

3. Vorrichtung nach Anspruch 1 oder 2,
**dadurch gekennzeichnet, dass**
der Zugriff auf den schmalbandigen Übertragungskanal durch Abwarten einer Übertragungslücke erfolgt.

4. Vorrichtung nach einem oder mehreren der vorhergehenden Ansprüche,
**dadurch gekennzeichnet, dass**
der breitbandige Audio-/Video-Übertragungskanal zur bidirektionalen Übertragung von Audio- und/oder Videosignalen vorgesehen ist.

5. Vorrichtung nach einem oder mehreren der vorhergehenden Ansprüche,
**dadurch gekennzeichnet, dass**
sie zur Verwendung in einem lokalen Audio-Video-Netzwerk vorgesehen ist.

## Claims

1. Apparatus for the transmission of digital signals over a transmission network to which a multiplicity of terminals (1,2) are connected, the terminals having different bandwidth requirements and the transmission network having a narrowband transmission channel (3), for the transmission of data of a few bps for the transmission of control information, and a broadband audio/video transmission channel (4) having a bandwidth of a few 10 kbps up to some 10 Mbps for the transmission of audio and/or video signals, the narrowband transmission channel being usable by all terminals (1, 2) connected to the transmission network and the broadband audio/video transmission channel being usable only by the terminals having a high bandwidth requirement (2),
**characterized in that**
there is provided in the apparatus a control unit which, in response to a query signal of a terminal, checks whether a subchannel of appropriate bandwidth is free, said subchannel being required as a broadband audio/video transmission channel by the terminal concerned, and releases said subchannel, as signal source, to the terminal and to a further terminal, as signal drain of the latter and, if such a subchannel is not available, provides for the establishment of this subchannel, taking account of predefined hierarchical criteria, releases this then established subchannel to effect enabling between the two terminals, and the narrowband transmission channel is provided for the unidirectional transmission of control information, and the broadband audio/video transmission can be divided into a multiplicity of dynamic subchannels, and the narrowband transmission channel is provided for the management and enabling of the dynamic subchannels.

2. Apparatus according to claim 1,
**characterized in that**
the narrowband transmission channel is provided for the low-rate transmission of control information.

3. Apparatus according to either of claims 1 or 2,
**characterized in that**
access to the narrowband transmission channel is effected by awaiting a transmission gap.

4. Apparatus according to one or more of the preceding claims,
**characterized in that**
the broadband audio/video transmission channel is provided for the bidirectional transmission of audio and/or video signals.

5. Apparatus according to one or more of the preceding claims,
**characterized in that**
said apparatus is provided for use in a local audio-video network.

## Revendications

1. Dispositif pour transmettre des signaux numériques par l'intermédiaire d'un réseau de transmission, auquel est connectée une pluralité de terminaux (1, 2), dans lequel les terminaux présentent des demandes de bande passante différentes et le réseau de transmission présente un canal de transmission à bande étroite (3) pour transmettre des données de quelques bps afin de transmettre des informations de commande et un canal de transmission audio/vidéo à large bande (4) avec une bande passante de quelques 10 bps jusqu'à quelques 10 Mbps pour la transmission de signaux audio et/ou vidéo, dans lequel le canal de transmission à bande étroite peut être utilisé par tous les terminaux (1, 2) connectés au réseau de transmission et le canal de transmission audio/vidéo à large bande peut être utilisé uniquement par les terminaux avec une demande de bande passante élevée (2),
**caractérisé en ce que**
une unité de commande est prévue dans le dispositif, qui vérifie en réaction à un signal de demande d'un terminal, si un sous-canal à bande passante appropriée, qui est utilisé par le terminal concerné comme canal de transmission audio/vidéo à large bande, est libre et attribue celui-ci au terminal en tant qu'émetteur de signal et à un autre terminal en tant que récepteur de signal et, au cas où un tel sous-canal n'existe pas, veille, en prenant en compte des critères hiérarchiques prédéterminés, à l'aménagement de ce sous-canal, attribue ce sous-canal alors aménagé dans le sens d'une déconnexion entre les deux terminaux et le canal de transmission à bande étroite est prévu pour une transmission unidirectionnelle d'informations de commande et le canal de transmission audio/vidéo à large bande peut être séparé en une pluralité de sous-canaux dynamiques et le canal de transmission à bande étroite est prévu pour l'administration et la déconnexion des sous-canaux dynamiques.

2. Dispositif selon la revendication 1, **caractérisé en ce que** le canal de transmission à bande étroite est prévu pour une transmission à faible taux d'échantillonnage d'informations de commande.

3. Dispositif selon la revendication 1 ou 2, **caractérisé en ce que** l'accès au canal de transmission à bande étroite s'effectue pendant l'attente d'une interruption de transmission.

4. Dispositif selon l'une ou plusieurs des revendications précédentes, **caractérisé en ce que** le canal de transmission audio/vidéo à large bande est prévu pour une transmission bidirectionnelle des signaux vidéo audio et/ou vidéo.

5. Dispositif selon l'une ou plusieurs des revendications précédentes, **caractérisé en ce qu'**il est prévu pour une utilisation dans un réseau audio-vidéo local.
